# FASCICULE DE BREVET EUROPEEN

(11) **EP 0 383 644 B1**
(45) Date de publication et mention de la délivrance du brevet: **14.04.1993**
(21) Numéro de dépôt: 90400194.8
(22) Date de dépôt: 23.01.1990
(51) Int. Cl.: B65D 47/34, B65D 47/06, G01F 11/08

(54) **Flacon doseur**
Flasche mit Dosiervorrichtung
Dosing bottle

(30) Priorité: 14.02.1989 FR 8901905
(43) Date de publication de la demande: 22.08.1990
(73) Titulaire: L'OREAL, 75008 Paris (FR)
(72) Inventeur: Joulia, Gérard, F-75019 Paris (FR)
(74) Mandataire: Michardière, Bernard

(56) Documents cités:
- FR-A- 1 333 491
- GB-A- 741 427
- US-A- 3 171 446

## Description

La présente invention est relative à un flacon doseur, et plus particulièrement à un flacon, qui est destiné à contenir un produit liquide, et, qui est muni d'un dispositif permettant de doser automatiquement les quantités de liquide, qui sont distribuées.

On connaît, actuellement, de nombreux distributeurs de liquide qui comportent un dispositif de dosage. Il existe, notamment, des distributeurs dont le réservoir principal communique, par l'intermédiaire d'un dispositif à siphon, avec une chambre de dosage. Ces dispositifs sont, le plus souvent, d'utilisation compliquée et nécessitent, par rapport aux flacons classiques, des manipulations supplémentaires de la part de l'utilisateur, comme par exemple des opérations de pompage. Ils comportent, de plus, généralement, un nombre élevé de pièces, ce qui rend leur fabrication relativement onéreuse.

On connaît, aussi, des distributeurs doseurs du type à piston. Ces dispositifs sont constitués d'un réservoir comprenant une ouverture de distribution, qui est associée à un piston mobile dans une chambre dont est munie le réservoir, piston qui est adapté pour venir obturer ladite ouverture de distribution, après un court laps de temps, lorsque l'on verse du liquide. Lorsque l'on veut distribuer une dose de liquide, on renverse le distributeur, de façon que son ouverture de distribution soit en position basse. Le produit s'écoule, alors, à travers cette ouverture, tandis que le piston descend progressivement dans la chambre, jusqu'à venir boucher l'ouverture de distribution du flacon. De tels distributeurs sont relativement peu fiables quant aux quantités de produit qu'ils permettent de doser, quantités qui dépendent des pressions exercées sur le piston au moment où l'on verse et donc, généralement, du volume de liquide contenu dans le réservoir.

La demande de brevet européen EP-A1-0̸ 274 256 propose un distributeur doseur permettant de résoudre ce problème et d'obtenir un dosage sensiblement indépendant de l'état de remplissage du réservoir. L'avance du piston dans sa chambre de dosage est contrôlée par la différence des pressions auxquelles sont soumises les faces de ce piston, cette différence étant, grâce à une conformation particulière de l'ouverture de distribution et de la chambre, constante quelque soit le volume de liquide dans le réservoir. Cependant, le piston de ce distributeur doit être adapté de façon très précise à la chambre dans laquelle il coulisse. S'il existe un jeu entre le piston et la chambre, les deux volumes de chaque côté du piston seront en communication et la différence des pressions sur les faces du piston se trouvera attenuée. Si par contre les dimensions du piston sont légèrement supérieures aux dimensions de la chambre, la descente du piston sera freinée par des frottements. Dans les deux cas, le dosage s'en trouvera déréglé. Or, on obtient rarement des pièces de dimensions exactes lorsqu'elles sont moulées en matière plastique, matière qui est le plus souvent utilisée pour les flacons de conditionnement ; la réalisation de ce distributeur est donc relativement difficile en raison des tolérances de moulage.

La présente invention propose un flacon doseur permettant de pallier ces inconvénients. Ce flacon-doseur permet, en effet, de doser automatiquement et sans manipulation compliquée de la part de l'utilisateur, les quantités de liquide distribuées. Il est, de plus, de structure et de réalisation relativement simples et peu onéreuses.

La présente invention a donc pour objet, un flacon doseur comportant, d'une part, un récipient destiné à contenir un liquide, ledit récipient étant surmonté par un goulot, et d'autre part, une chambre de dosage communiquant avec le récipient, le volume de ladite chambre étant variable, les parois latérales de la chambre étant constituées par un soufflet, le fond de ladite chambre comportant une ouverture reliée à un tube plongeur disposé dans le récipient, ladite ouverture étant munie d'un clapet pouvant s'ouvrir vers l'intérieur de la chambre sous l'effet d'une pression s'exerçant de l'intérieur du récipient vers ladite chambre, l'extrémité de la chambre opposée audit fond étant ouverte et associée à un organe obturateur destiné à l'obturer de façon sensiblement étanche pendant que l'on passe d'une position repliée de la chambre à une position dépliée, ladite extrémité aboutissant, en position dépliée de la chambre, à l'intérieur du goulot, l'ensemble comportant au moins un passage permettant l'évacuation de l'air de la chambre lorsque l'on replie celle-ci.

Avantageusement, le soufflet, que forment les parois latérales de la chambre, est un organe élastique, qui se détend lorsqu'il n'est l'objet d'aucune contrainte en compression selon son axe, le goulot étant associé à un capuchon, qui est muni d'un organe poussoir destiné à s'enfiler à l'intérieur du goulot et à s'appuyer sur l'extrémité ouverte dudit soufflet, pour maintenir ledit soufflet en compression, dans sa position repliée. L'organe poussoir du capuchon peut être aussi l'organe obturateur de l'extrémité ouverte du soufflet. La surface de l'organe poussoir du côté de son appui sur l'extrémité ouverte du soufflet peut être convexe et épouser sensiblement les bords de ladite extrémité. Le capuchon et le goulot peuvent être munis de filetages complémentaires, l'organe poussoir étant, selon qu'on effectue un vissage ou un dévissage du capuchon sur ledit goulot, soit mis en appui sur l'extrémité libre du soufflet, soit retiré de l'intérieur du goulot.

De préférence, l'ouverture du fond de la chambre est une ouverture circulaire, le clapet anti-retour, qui lui est associé, comportant une bille, dont le diamètre est plus important que le diamètre de l'ouverture, bille qui, en position d'obturation, vient coopérer avec les bords de ladite ouverture. L'ouverture du fond de la chambre peut être ménagée à une des extrémités d'un canal dont les parois s'évasent de ladite ouverture vers l'intérieur de la chambre, ledit canal servant de guide pour la bille lorsqu'elle se soulève ou retombe sur le fond pour ouvrir ou obturer ladite ouverture.

Avantageusement, le fond de la chambre est percé d'au moins un micro-trou servant de passage à l'évacuation de l'air. Les parois du canal peuvent pénétrer, au moins partiellement, dans la zone du récipient et peuvent être percées, dans une zone proche du goulot, par au moins un micro-trou.

De préférence, le soufflet peut être une pièce distincte du fond de la chambre, et peut être positionné sur celui-ci par l'intermédiaire d'une jupe annulaire dont est muni ledit fond et sur laquelle vient s'emboîter avec un léger serrage l'extrémité du soufflet opposée à son extrémité ouverte. Le fond de la chambre peut être le fond d'une capsule cylindrique qui est ouverte à son autre extrémité et dont la paroi épouse la surface intérieure du goulot, son extrémité ouverte étant munie d'une collerette annulaire en saillie vers l'extérieur par rapport à ladite paroi, collerette qui se positionne sur les bords du goulot.

De préférence, le tube plongeur est solidarisé de l'ouverture du fond par l'intermédiaire d'un conduit tubulaire, dont est muni ledit fond et dans lequel il est emboîté avec un léger serrage. L'organe poussoir peut être emboîté, avec un léger serrage, sur un manchon dont est muni le capuchon.

Pour mieux faire comprendre l'objet de la présente invention, on va en décrire ci-après, à titre purement illustratif et non limitatif, un mode de réalisation représenté sur le dessin annexé.

Sur ce dessin :

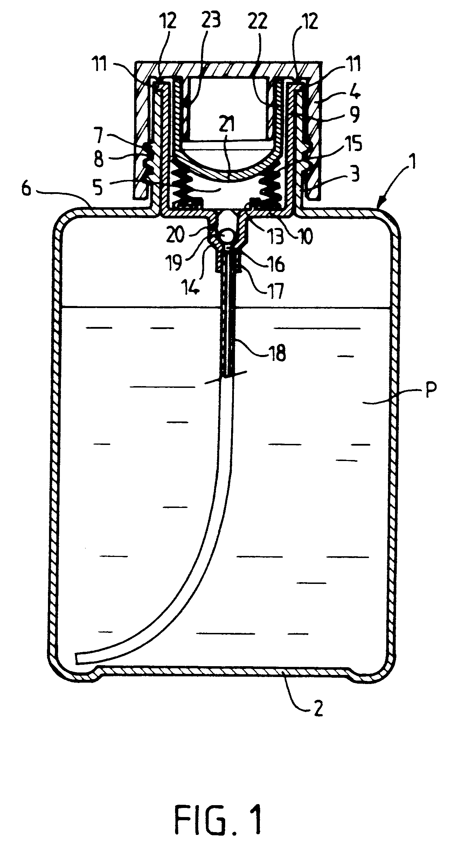

- la figure 1 est une vue en coupe d'un flacon doseur, conforme à l'invention, fermé par un capuchon vissé sur son goulot ;

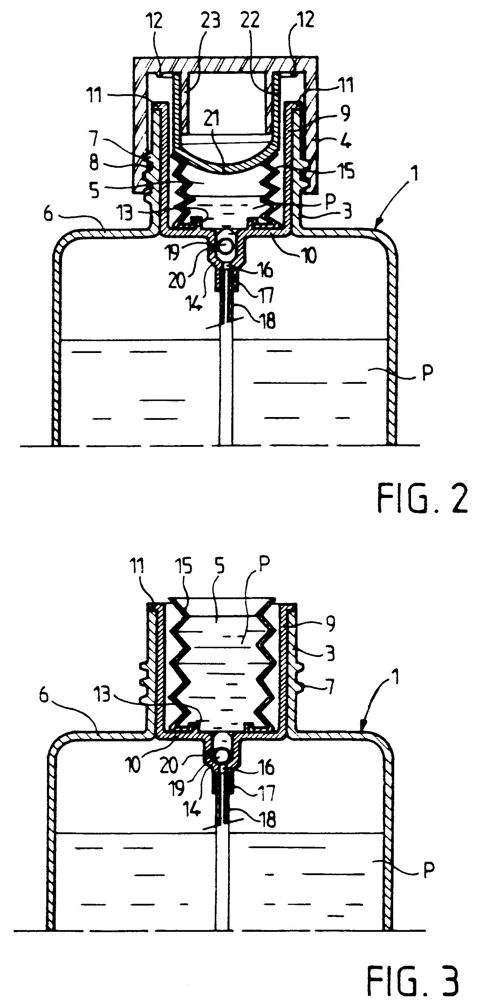

- la figure 2 est une vue en coupe de la partie supérieure du flacon doseur de la figure 1, dont le capuchon est partiellement dévissé ;
- la figure 3 est une vue en coupe de la partie supérieure du flacon doseur des figures 1 et 2, dont la chambre de dosage est remplie et auquel on a retiré son capuchon.

En se référant au dessin, on voit que le flacon doseur comporte un récipient 1, qui est un cylindre creux de section droite circulaire ayant un fond 2 et un goulot 3 à son extrémité opposée. Les parois de ce goulot 3 coopèrent, par leur surface extérieure, avec un capuchon 4 venant se visser sur ledit goulot. Le goulot 3 comporte en son intérieur une chambre de dosage 5 dans laquelle sont aspirées, comme cela sera décrit plus loin, des quantités dosées du produit liquide P contenu dans le récipient 1, ces doses étant distribuées hors du récipient 1. Le goulot 3 est un manchon cylindrique tubulaire, de section droite circulaire, prolongeant, sur l'axe du récipient 1, un orifice circulaire dont est munie la paroi 6 dudit récipient 1, en regard du fond 2. Ce goulot 3 comporte, de plus, sur sa sur face extérieure, un filetage 7 qui coopère avec un filetage intérieur 8 du capuchon 4. Le capuchon 4 est cylindrique ; il a une extrémité ouverte et une extrémité obturée par un fond ; son diamètre intérieur est légèrement supérieur au diamètre extérieur du goulot 3.

Le goulot 3 comporte en son intérieur une capsule 9 ayant un fond 10̸ et une paroi cylindrique épousant sensiblement la surface intérieure du goulot 3. Le fond 10̸ est positionné au niveau de la paroi 6 du récipient 1, parallèlement a celle-ci. L'extrémité de la capsule 9 opposée à ce fond 10̸ est une ouverture libre, qui est terminée par une collerette annulaire 11, en saillie vers l'extérieur du goulot 3. Ladite collerette 11 s'appuie sur l'extrémité libre du goulot 3. Le fond du capuchon 4 est muni sur sa surface en regard du goulot 3 d'une protubérance annulaire 12, qui vient s'appuyer sur la collerette 11 lorsque le capuchon 4 est vissé. Le fond 10̸ de la capsule 9 est muni en son intérieur, sur sa surface destinée a être en regard du capuchon 4, d'une jupe annulaire 13 centrée sur l'axe du récipient 1. Ce fond 10̸ est, de plus, prolongé par un canal 14 s'étendant vers l'intérieur du réservoir 1, ce canal 14 ayant le même axe que le récipient 1, son intersection avec le plan du fond 10̸ ayant un diamètre inférieur au diamètre intérieur de la jupe 13.

Sur la surface extérieure de la jupe 13, vient se positionner un organe en soufflet 15. Cet organe en soufflet 15 délimite, avec le fond 10̸ et le canal 14 la chambre de dosage 5 du flacon doseur. Il a une configuration en accordéon, dont les saillies intérieures sont positionnées, sensiblement, selon un cylindre dont le diamètre est le diamètre extérieur de la jupe 13, et dont les saillies extérieures sont disposées sur un cylindre proche de la surface intérieure de la paroi de la capsule 9. Le fond de la chambre 5 est ouvert vers l'intérieur du récipient 1 par l'intermédiaire d'une ouverture 16 qui termine le canal 14. Ce canal 14 s'évase sensiblement de ladite ouverture 16 vers le plan du fond 10̸. Cette ouverture 16 est elle-même prolongée axialement, vers l'intérieur du réservoir 1, par un conduit 17 dans lequel est emboîté, avec un léger serrage, un tube plongeur 18 plongeant dans le liquide P du réservoir 1, son extrémité étant proche du fond 2 du réservoir 1. Le canal 14 comporte en son intérieur une bille sphérique 19, dont le diamètre est supérieur à celui de l'ouverture 16. Lorsqu'il n'est exercé, sur cette bille 19, aucune action pouvant la repousser vers l'intérieur de la chambre 5, elle tombe au fond du canal 14 et vient boucher l'ouverture 16. Le canal 14 comporte, de plus, un micro-trou 20̸, qui traverse sa paroi. Ce micro-trou 20̸ est positionné suffisamment loin de l'ouverture 16 de façon à ne pas être obturé par les parois de la bille 19, lorsque celle-ci ferme l'ouverture 16.

Sur le capuchon 4 est monté axialement un organe poussoir 21 ayant une extrémité sphéroïdale destinée à s'appuyer, lorsque le capuchon 4 est en position sur le goulot 3, sur l'extrémité libre du soufflet 15 opposée au fond de la chambre 5. La partie de cet organe poussoir 21, opposée à sa partie sphéroïdale, est un manchon 22 qui coopère avec un manchon intérieur 23, dont est muni axialement le capuchon 4, le manchon 22 étant emboîté sur la surface extérieure du manchon 23, avec un léger serrage. La longueur de ce manchon 22 est telle que, lorsque le capuchon 4 est vissé en position fermée sur le goulot 3, l'organe poussoir 21 appuie et maintient le soufflet 15 dans une position comprimée.

Les différentes pièces de ce flacon doseur sont moulées en matière plastique. Son montage est relativement simple : une fois le réservoir rempli de produit P, après avoir assemblé le soufflet 15 et la capsule 9, par l'intermédiaire de la jupe 13, ainsi que le tube plongeur 18 et le canal 14, grâce au conduit 17, on place la bille 19 dans le canal 14, on déforme les bords de l'ouverture du canal 14 dans le fond 10̸ pour empêcher la bille 19 de ressortir, puis on insère la capsule 9 à l'intérieur du goulot 3, la collerette 11 venant s'appuyer sur l'extrémité libre de ce goulot 3. Il reste alors à visser le capuchon 4 sur le goulot 3.

Pour utiliser un tel flacon doseur, dont le réservoir 1 est, au moins partiellement, rempli par un liquide P, et, sur lequel le capuchon 4 est vissé en position fermée sur le goulot 3, on dévisse ledit capuchon 4, ce qui a pour effet de le faire remonter axialement le long du goulot 3. La montée progressive de l'organe poussoir 21 dans la capsule 9 permet au soufflet 15, jusque là maintenu en compression, de se déployer élastiquement jusqu'à une position totalement dépliée, lorsque l'organe poussoir 21 n'est plus en contact avec l'extrémité libre de la chambre 5, extrémité qui est celle du soufflet 15. L'organe poussoir 21 étant positionné de façon étanche sur l'extrémité libre du soufflet 15, l'augmentation du volume de la chambre 5 crée une différence de pression entre l'intérieur de ladite chambre 5 et l'intérieur du réservoir 1. Cette dépression soulève la bille 19 et aspire le liquide P du réservoir 1 ; le liquide passe progressivement, par l'intermédiaire du tube 18 et de l'ouverture 16, dans la chambre 5, afin d'équilibrer les pressions qui règnent dans le réservoir 1 et dans la chambre 5. La montée du liquide P dans la chambre 5 s'effectue tant que l'organe poussoir 21, déplacé vers le haut avec le capuchon 4, assure l'étanchéité en tête du soufflet 15. Quand cette étanchéité est rompue à l'enlèvement du capuchon 4, le liquide P tend à redescendre dans le récipient 1 mais alors, la bille 19 retombe dans le fond du canal 14 bouchant l'ouverture 16 et empêchant le liquide P de redescendre. L'utilisateur a ainsi, à sa disposition, une dose de produit d'un volume, qui est sensiblement celui de la chambre 5 lorsque celle-ci est déployée. Une fois que le liquide P contenu dans la chambre 5 a été versé, on revisse le capuchon 4 sur le goulot 3. L'organe poussoir 21 vient à nouveau s'appuyer sur les bords de l'ouverture libre de la chambre 5, par l'intermédiaire de sa surface sphéroïdale et le soufflet 15 est replié en position comprimée. En repliant la chambre 5, l'organe poussoir 21, en appui étanche sur l'extrémité libre du soufflet 15, comprime l'air de la chambre 5 ; cet air ne pouvant s'échapper par l'ouverture 16 bouchée par la bille 19, est refoulé par le micro-trou 20̸. Le volume d'air ainsi chassé passe dans le réservoir 1 et comble la dépression, qui pouvait exister dans le réservoir 1, par rapport à la chambre de dosage 5, en apportant un volume d'air sensiblement équivalent au volume de liquide P, qui a été versé.

## Revendications

1. Flacon doseur comportant d'une part un récipient (1) destiné à contenir un produit liquide (P), ledit récipient (1) étant surmonté par un goulot (3) et d'autre part, une chambre de dosage (5) communiquant avec le récipient (1), caractérisé par le fait que le volume de ladite chambre (5) est variable, les parois latérales de la chambre (5) étant constituées par un soufflet (15), le fond (10̸, 14) de ladite chambre (5) comportant une ouverture (16) reliée à un tube plongeur (18) disposé dans le récipient (1), ladite ouverture (16) étant munie d'un clapet anti-retour (19) pouvant s'ouvrir vers l'intérieur de la chambre (5) sous l'effet d'une pression s'exerçant de l'intérieur du récipient (1) vers ladite chambre (5), l'extrémité de la chambre (5) opposée audit fond (10̸, 14) étant ouverte et associée à un organe obturateur (21) destiné à l'obturer de façon sensiblement étanche lorsque l'on passe d'une position repliée de la chambre (5) à une position dépliée, ladite extrémité aboutissant en position dépliée de la chambre (5) à l'intérieur du goulot (3), l'ensemble comportant au moins un passage (20̸) permettant l'évacuation de l'air de la chambre (5) lorsqu'on replie celle-ci.

2. Flacon doseur selon la revendication 1, caractérisé par le fait que le soufflet (15), que forment les parois latérales de la chambre (5), est un organe élastique, qui se déploie lorsqu'il n'est l'objet d'aucune contrainte en compression selon son axe, le goulot (3) étant associé à un capuchon (4), qui est muni d'un organe poussoir (21) destiné à s'enfiler à l'intérieur du goulot (3) et à s'appuyer sur l'extrémité ouverte dudit soufflet (15), pour maintenir ledit soufflet (15), en compression, dans sa position repliée.

3. Flacon doseur selon la revendication 2, caractérisé par le fait que l'organe poussoir (21) du capuchon (4) est aussi l'organe obturateur (21) de l'extrémité ouverte du soufflet (15).

4. Flacon doseur selon la revendication 3, caractérisé par le fait que la surface de l'organe poussoir (21) du côté de son appui sur l'extrémité ouverte du soufflet (15) est convexe et épouse sensiblement les bords de ladite extrémité.

5. Flacon doseur selon l'une des revendications 2 à 4, caractérisé par le fait que le capuchon (4) et le goulot (3) sont munis de filetages complémentaires (7, 8) l'organe poussoir (21) étant, selon qu'on effectue un vissage ou un dévissage du capuchon (4) sur ledit goulot (3), soit mis en appui sur l'extrémité libre du soufflet (15), soit retiré de l'intérieur du goulot (3).

6. Flacon doseur selon l'une des revendications 1 à 5, caractérisé par le fait que l'ouverture (16) du fond (10̸, 14) de la chambre (5) est une ouverture circulaire, le clapet anti-retour, qui lui est associé, comportant une bille (19), dont le diamètre est plus important que le diamètre de l'ouverture (16), bille (19), qui, en position d'obturation, vient coopérer avec les bords de ladite ouverture (16).

7. Flacon doseur selon la revendication 6, caractérisé par le fait que l'ouverture (16) du fond (10̸, 14) de la chambre (5) est ménagée à une des extrémités d'un canal (14) dont les parois s'évasent de ladite ouverture (16) vers l'intérieur de la chambre (5), ledit canal (14) servant de guide pour la bille (19) lorsqu'elle se soulève ou retombe sur le fond pour ouvrir ou obturer ladite ouverture (16).

8. Flacon doseur selon l'une des revendications 1 à 7, caractérisé par le fait que le fond (10̸, 14) de la chambre (5) est percé d'au moins un micro- trou (20̸) servant de passage d'évacuation de l'air.

9. Flacon doseur selon l'une des revendications 1 à 8, caractérisé par le fait que le soufflet (15) est une pièce distincte du fond (10̸, 14) de la chambre (5), et est positionné sur celui-ci par l'intermédiaire d'une jupe (13) annulaire dont est muni ledit fond (10̸, 14) et sur laquelle vient s'emboîter avec un léger serrage l'extrémité du soufflet (15) opposée à son extrémité ouverte.

10. Flacon doseur selon la revendication 9, caractérisé par le fait que le fond (10̸, 14) de la chambre (5) est le fond (10̸) d'une capsule (9) cylindrique qui est ouverte à son autre extrémité et dont la paroi épouse la surface extérieure du goulot (3), son extrémité ouverte étant munie d'une collerette (11) annulaire en saillie vers l'extérieur par rapport à ladite paroi, collerette (11) qui se positionne sur les bords du goulot (3).

## Patentansprüche

1. Dosierflakon mit einerseits einem Behälter (1), der zur Aufnahme eines Flüssigprodukts (P) bestimmt ist und von einem Hals (3) überragt wird, und andererseits einer mit dem Behälter (1) kommunizierenden Dosierkammer (5),
dadurch gekennzeichnet, daß
das Volumen der Kammer (5) variabel ist, die Seitenwände der Kammer (5) durch einen Balg (15) gebildet werden und der Boden (10̸,14) der Kammer (5) eine Öffnung (16) aufweist, die mit einem im Behälter (1) angeordneten Tauchrohr (18) verbunden ist, wobei die Öffnung (16) mit einem Rückschlagventil (19) ausgerüstet ist, das sich unter der Wirkung eines im Inneren des Behälters (1) gegenüber der Kammer (5) herrschenden Drucks zum Inneren der Kammer (5) öffnen kann, und wobei das dem Boden (10̸,14) abgewandte Ende der Kammer (5) offen ist und mit einem Verschlußorgan (21) assoziiert ist, das dazu bestimmt ist, das Ende beim Übergang von einer zusammengedrückten Stellung der Kammer (5) in eine auseinandergeschobene Stellung im wesentlichen dicht zu verschließen, wobei das Ende in auseinandergeschobener Stellung der Kammer (5) an das Innere des Halses (3) grenzt, und wobei das Ganze wenigstens einen Durchlaß (20̸) aufweist, der die Entlüftung der Kammer (5) beim Zusammendrücken erlaubt.

2. Dosierflakon nach Anspruch 1, dadurch gekennzeichnet, daß der die Seitenwände der Kammer (5) bildende Balg (15) ein elastisches Organ ist, das sich entfaltet, wenn es nicht einer Druckkraft längs seiner Achse ausgesetzt ist, und daß der Hals (3) mit einer Kappe (4) assoziiert ist, die mit einem Druckorgan (21) ausgerüstet ist, welches dazu bestimmt ist, in das Innere des Halses (3) eingeführt zu werden und auf das offene Ende des Balgs (15) zu drücken, um den Balg (15) unter Druck in der zusammengedrückten Stellung zu halten.

3. Dosierflakon nach Anspruch 2, dadurch gekennzeichnet, daß das Druckorgan (21) der Kappe (4) auch das Verschlußorgan (21) des offenen Endes des Balgs (15) ist.

4. Dosierflakon nach Anspruch 3, dadurch gekennzeichnet, daß die Oberfläche des Druckorgans (21) an der Seite, an der es auf das offene Ende des Balgs (15) drückt, konvex ist und sich im wesentlichen an die Ränder des Endes anschmiegt.

5. Dosierflakon nach einem der Ansprüche 2 bis 4, dadurch gekennzeichnet, daß die Kappe (4) und der Hals (3) mit komplementären Gewinden (7,8) ausgerüstet sind, wobei das Druckorgan (21), je nachdem, ob man die Kappe (4) auf den Hals (3) schraubt oder von ihm abschraubt, in Anlage gegen das freie Ende des Balgs (15) kommt oder aus dem Inneren des Halses (3) herausgezogen wird.

6. Dosierflakon nach einem der Ansprüche 1 bis 5, dadurch gekennzeichnet, daß die Öffnung (16) des Bodens (10̸,14) der Kammer (5) eine kreisförmige Öffnung ist, und das mit dieser assoziierte Rückschlagventil eine Kugel (19) umfaßt, deren Durchmesser größer als der Durchmesser der Öffnung (16) ist und die in Schließstellung mit den Rändern der Öffnung (16) zusammenwirkt.

7. Dosierflakon nach Anspruch 6, dadurch gekennzeichnet, daß die Öffnung (16) des Bodens (10̸,14) der Kammer (5) an einer der Seiten mit einem Kanal (14) ausgerüstet ist, dessen Wände sich von der Öffnung (16) zum Inneren der Kammern (5) erweitern, wobei der Kanal (14) als Führung für die Kugel (19) dient, wenn diese zum Öffnen oder Schließen der Öffnung (16) angehoben wird oder in den sitz zurückfällt.

8. Dosierflakon nach einem der Ansprüche 1 bis 7, dadurch gekennzeichnet, daß der Boden (10̸,14) der Kammer (5) mit mindestens einem kleinen Loch (20̸) durchbrochen ist, das als Durchlaß für die Entlüftung dient.

9. Dosierflakon nach einem der Ansprüche 1 bis 8, dadurch gekennzeichnet, daß der Balg (15) ein vom Boden (10̸,14) der Kammer (5) gesondertes Teil darstellt und mit Hilfe einer ringförmigen Schürze (13) auf dem Boden positioniert wird, wobei der Boden (10̸,14) mit der Schürze ausgerüstet ist und das dem offenen Ende abgewandte Ende des Balgs (15) mit leichter Klemmung auf der Schürze sitzt.

10. Dosierflakon nach Anspruch 9, dadurch gekennzeichnet, daß der Boden (10̸,14) der Kammer (5) durch den Boden (10̸) eines zylindrischen Einsatzes (9) gebildet wird, wobei der Einsatz am anderen Ende offen ist, die Wandung des Einsatzes an der Außenfläche des Halses (3) liegt und das offene Ende des Einsatzes mit einem ringförmigen Flansch (11) ausgerüstet ist, der von der Wandung nach außen ragt und auf den Rändern des Halses (3) angeordnet ist.

## Claims

1. Dosing bottle comprising, on the one hand, a container (1) intended to contain a liquid product (P), the said container (1) being surmounted by a neck (3) and, on the other hand, a dosing chamber (5) communicating with the container (1), characterised in that the volume of the said chamber (5) is variable, the lateral walls of the chamber (5) consisting of a bellows (15), the bottom (10̸, 14) of the said chamber (5) comprising an opening (16) connected to a plunger tube (18) arranged in the container (1), the said opening (16) being equipped with a non-return valve (19) which can open towards the inside of the chamber (5) under the effect of pressure being exerted from the inside of the container (1) towards the said chamber (5), the end of the chamber (5) opposite the said bottom (10̸, 14) being open and combined with a stopper member (21) intended to stop it in a substantially sealed fashion when passing from a folded position of the chamber (5) to an unfolded position, the said end ending in the unfolded position of the chamber (5) inside the neck (3), the assembly comprising at least one passage (20̸) allowing the evacuation of air from the chamber (5) when the latter is folded.

2. Dosing bottle according to Claim 1, characterised in that the bellows (15), which the lateral walls of the chamber (5) form, is an elastic member which is deployed when it is not subjected to any compressive stress along its axis, the neck (3) being associated with a cap (4) which is equipped with a pusher member (21) intended to fit inside the neck (3) and to press on the open end of the said bellows (15) to hold the said bellows (15) in compression in its folded position.

3. Dosing bottle according to Claim 2, characterised in that the pusher member (21) of the cap (4) is also the stopper member (21) of the open end of the bellows (15).

4. Dosing bottle according to Claim 3, characterised in that the surface of the pusher member (21) on the side of its bearing on the open end of the bellows (15) is convex and substantially matches the edges of the said end.

5. Dosing bottle according to one of Claims 2 to 4, characterised in that the cap (4) and the neck (3) are equipped with complementary threads (7, 8), the pusher member (21) being, depending on whether the cap (4) is being screwed or unscrewed on the said neck (3), either pressed onto the free end of the bellows (15) or withdrawn from inside the neck (3).

6. Dosing bottle according to one of Claims 1 to 5, characterised in that the opening (16) of the bottom (10̸, 14) of the chamber (5) is a circular opening, the non-return valve, which is combined with it, comprising a ball (19) whose diameter is greater than the diameter of the opening (16), which ball (19) in the stopping position interacts with the edges of the said opening (16).

7. Dosing bottle according to Claim 6, characterised in that the opening (16) of the bottom (10̸, 14) of the chamber (5) is made at one of the ends of a channel (14) whose walls flare out from the said opening (16) towards the inside of the chamber (5), the said channel (14) serving as a guide for the ball (19) when it is raised from or falls back onto the bottom so as to open or stop the said opening (16).

8. Dosing bottle according to one of Claims 1 to 7, characterised in that the bottom (10̸, 14) of the chamber (5) is pierced with at least one micro-hole (20̸) serving as an air-evacuation passage.

9. Dosing bottle according to one of Claims 1 to 8, characterised in that the bellows (15) is a component distinct from the bottom (10̸, 14) of the chamber (5) and is positioned on the latter by means of an annular skirt (13) with which the said bottom (10̸, 14) is equipped and on which the end of the bellows (15) opposite its open end is fitted with slight clamping.

10. Dosing bottle according to Claim 9, characterised in that the bottom (10̸, 14) of the chamber (5) is the bottom (10̸) of a cylindrical capsule (9) which is open at its other end and whose wall matches the outer surface of the neck (3), its open end being equipped with an annular collar (11) projecting towards the outside with respect to the said wall, which collar (11) is positioned on the edges of the neck (3).
